# EUROPEAN PATENT SPECIFICATION

(11) **EP 1 752 369 B1**
(45) Date of publication and mention of the grant of the patent: **11.11.2009**
(21) Application number: 06019473.5
(22) Date of filing: 06.02.2001
(51) Int. Cl.: B62K 11/10, B62K 19/46, F02B 61/02

(54) **Scooter-type vehicle**
Motorrollerartiges Fahrzeug
Véhicule du type scooter

(30) Priority: 07.02.2000 JP 2000029599
(43) Date of publication of application: 14.02.2007
(62) Divisional of application: 01102607.7
(73) Proprietor: SUZUKI KABUSHIKI KAISHA, Hamamatsu-Shi, Shizuoka-Ken (JP)
(72) Inventor: Kurata, Koji, Hamamatsu-shi Shizuoka-ken (JP)
(74) Representative: Klunker . Schmitt-Nilson . Hirsch

(56) References cited:
- EP-A1- 0 806 557
- FR-A1- 2 698 603
- US-A- 4 557 345

## Description

### BACKGROUND OF THE INVENTION

The present invention relates to a scooter type vehicle, and more particularly to a scooter type vehicle provided with a fuel injection type intake apparatus.

In a prior art, there has been provided a structure using a carburetor as means for supplying an air-fuel mixture to an engine (EP 0 806 557 A). The carburetor generally has a structure to obtain a best setting by combining some kinds of jets in order to respond to a requirement for traveling. However, it is impossible to expediently correspond to changes of driving conditions, circumferential environments and the like.

Accordingly, in recent years, there has been popularly proposed an engine provided with a fuel injection type intake apparatus which detects a throttle opening degree, an engine rotational number, an engine temperature, an external air temperature, an external air pressure and the like by a sensor and then processes the information mentioned above by a computer so as to directly inject a required fuel, of an amount which is most suitable at that time, to an intake passage of the engine.

The fuel injection type intake apparatus has advantages such as that a combustion efficiency is improved and an output can be improved. However, a fuel consumption amount is reduced since only a minimum required amount of fuel is injected, an amount of harmful objects in an exhaust gas is reduced and the like, so that the fuel injection type intake apparatus has been generally employed in an automobile.

However, in the case of a compact vehicle such as a scooter type vehicle, since a. lot of parts are provided within a limited narrow space, it is necessary to sufficiently consider arrangement of a controller having a computer installed, a fuel pump and various kinds of sensors in the case that a fuel injection type intake apparatus is newly provided.

In particular, since most of the scooter type vehicles have structures which are exposed to an external environment, it is particularly important, in the case of desiring an accurate control, to arrange a controller having a weak point with respect to heat, water, dust or the like with a maximum care.

The scooter type vehicle is frequently provided with a unit swing type engine which swings vertically together with a rear wheel as a drive wheel, and the fuel injection type intake apparatus is in many cases provided on an upper surface of the unit swing type engine so as to be integrally swung therewith. Accordingly, a position of a bottom surface of an article accommodation (storage) box arranged above the unit swing type engine is restricted.

Although a capacity of the article accommodation box can be increased at a certain degree by reducing an amount of stroke of a rear cushion unit elastically supporting the unit swing type engine, a rider's feeling is deteriorated.

FR 2 698 603 A1 as closest prior art discloses a scooter type vehicle comprising an accommodation box under a saddle of the vehicle, the accommodation box extending over a vehicle frame, being arranged above an engine suspending boss and having an opening in its upper part covered by the saddle. A removable wedge shaped separating partition is mounted inside to divide the interior compartment into front and rear spaces. The separating partition fits in grooves formed in the two lateral walls of the compartment.

### SUMMARY OF THE INVENTION

The present invention is made by taking the matters mentioned above into consideration, and an object of the present invention is to provide a scooter type vehicle capable of sufficiently securing a capacity or inner volume of an article accommodation box or chamber without deteriorating a rider's feeling.

This object and other objects can be achieved, according to the present invention by a scooter-type vehicle as defined in claim 1 or in claim 2.

That is, the scooter type vehicle of the present invention comprises:
a unit swing type engine provided with an engine body having a cylinder assembly forward inclined in a substantially horizontal direction and having a central axis arranged along a longitudinal direction of a vehicle body and a transmission case rearward extending from one side of the engine body and supporting a rear wheel to a rear end thereof, swingably pivoted to a vehicle body frame and flexibly supported to a vehicle body frame through a cushion unit;
a fuel injection type intake apparatus comprising a throttle body connected to an intake port of the cylinder assembly, an air cleaner connected to the throttle body, fuel injecting means and a controller for controlling a fuel injection amount of the fuel injecting means; and
an accommodation box arranged above the unit swing type engine, and in such scooter type vehicle:
   a bottom surface of a frontal area of the accommodation box is formed to be downwardly protruded in a side view, a helmet is accommodated in front of the top portion of the bottom surface of the accommodation box,
   a fuel tank is arranged in a vehicle body arranged in front of the unit swing type engine, the air cleaner is arranged above the unit swing type engine, and an engine suspending boss disposed on the upper surface of the swing unit type engine, the throttle body and the fuel injection means are disposed below the accommodation box and behind the downwardly protruded portion thereof. Also a carburetor may be used, taking the place of the throttle body and the fuel injection means.

The nature and further characteristic features of the present invention will be made more clear from the following descriptions made with reference to the accompanying drawings.

### BRIEF DESCRIPTION OF THE DRAWINGS

In the accompanying drawings:
Fig. 1 is a left side elevational view showing a first embodiment of a scooter type vehicle;
Fig. 2 is a left side elevational view showing an-internal structure of the scooter type vehicle shown in Fig. 1;
Fig. 3 is a schematic plan view of the scooter type vehicle shown in Figs. 1 and 2;
Fig. 4 is a schematic view of a fuel injection system for the scooter type vehicle of Fig. 1;
Fig. 5 is an enlarged left side elevational view of a fuel tank of the scooter type vehicle of Fig. 1;
Fig. 6 is an enlarged plan view of the fuel tank;
Fig. 7 is a left side elevational view showing an internal structure of a first example of a second embodiment of the scooter type vehicle to which the present invention is applicable;
Fig. 8 is a schematic plan view of the scooter type vehicle shown in Fig. 7;
Fig. 9 is a left side elevational view shoving an internal structure of a second example of the second embodiment of the scooter type vehicle to which the present invention is applicable;
Fig. 10 is a schematic plan view of the scooter type vehicle shown in Fig. 9:

### DESCRIPTION OF THE PREFERRED EMBODIMENTS

Preferred embodiments of the present invention will be described hereunder with reference to various examples shown in the accompanying drawings.

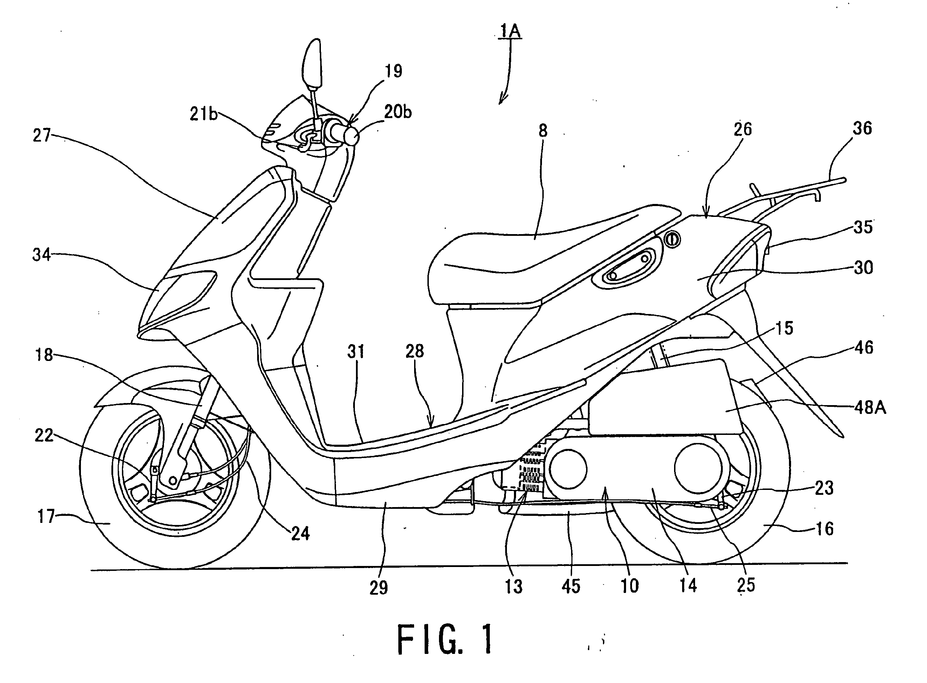

A first embodiment of a scooter type vehicle not being part of the invention will be first described with reference to Figs. 1 to 6.

As shown in Figs. 1 to 3, a scooter type vehicle 1A has a vehicle body frame 2. The vehicle body frame 2 is provided with a head pipe 3 in a forefront portion thereof and is constituted by a downtube 4 extending from a rear lower portion of the head pipe 3 towards a rear downward portion and extending in a substantially horizontal direction towards a rear portion from an intermediate portion thereof, and a pair of right and left rear frames 5 extending towards a rear upper portion from a rear end side of the downtube 4.

An article accommodation (storage) box 7A for accommodating (storing) an article such as helmet 6 is disposed above the rear frames 5. Further, a driver seat 8 commonly serving as a lid for the article accommodation box-7A is placed above the box 7A in a manner to be freely opened and closed, and a fuel tank 9A is arranged in a rear portion of the accommodation box 7A.

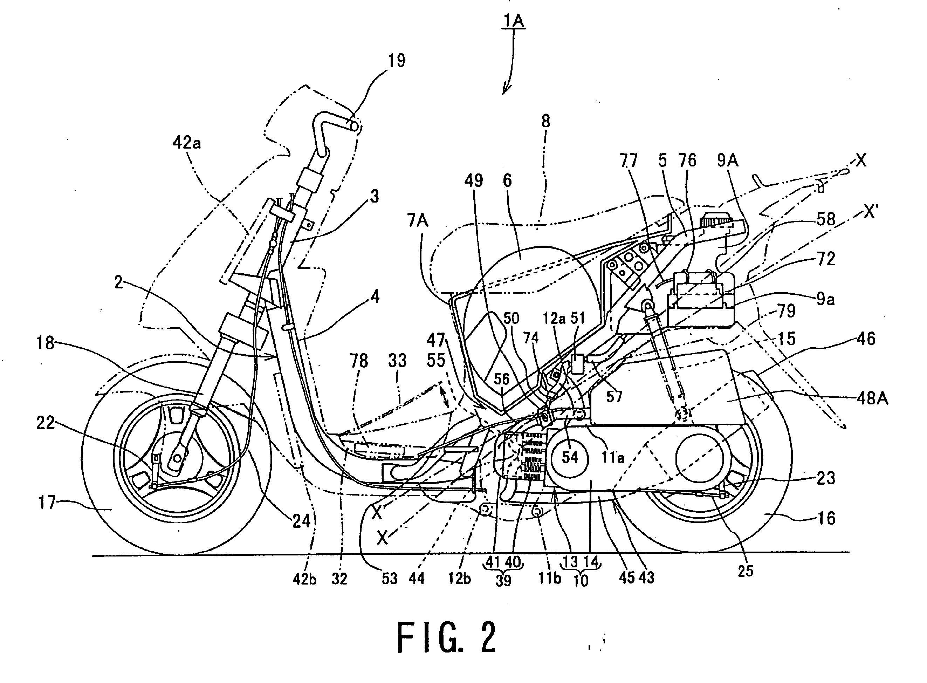

A unit swing type engine 10 is arranged in a substantially central lower portion of the rear frames 5. A pair of right and left engine suspending bosses 11a provided in parallel in a width direction of the vehicle body are provided on an upper surface of the unit swing type engine 10, and the engine suspending bosses 11a are pivoted to a pair of right and left engine suspending brackets 12a provided in a substantially central lower portion of the rear frames 5, so that the unit swing type engine 10 is swingably supported. In this case, as shown by a double-dotted chain line in Fig. 2, the structure may be made such that engine suspending bosses 11b are provided on a lower surface of the unit swing type engine 10 and the unit swing type engine 10 is pivoted to engine suspending brackets 12b provided in a rear end lower portion of the downtube 4.

The unit swing type engine 10 is integrally provided with an engine main body 13 and a transmitting case 14 rearward extending from a left side toward one side of the engine main body 13, that is, a forward moving direction of the vehicle in the present embodiment. The transmission case 14 commonly serves as a swing arm and is elastically supported to the rear frame 5 by a rear cushion unit 15. A rear wheel 16 as a driving wheel is pivoted to a rear end of the transmission case 14.

A front fork 18 rotatably supporting a front wheel 17, a handle bar 19 and the like are provided in the head pipe 3. Grips 20a and 20b are provided at both ends of the handle bar 19, in which the right grip 20a in a forward moving direction of the vehicle serves as a throttle grip. Further, brake levers 21a and 21b are provided in front sides of both of the grips 20a and 20b and connected respectively to brake apparatus 22 and 23 disposed to the front wheel 17 and the rear wheel 16 via brake wires 24 and 25. The front wheel 17 is rotatably steered to right and left by the handle bar 19.

Furthermore, the vehicle frame 2 is surrounded by a vehicle body cover 26 which constitutes an outer appearance of the vehicle body. The vehicle body cover 26 is structured by combining a plurality of cover elements. The cover elements are particularly constituted by, for example, a front leg shield 27, a rear leg shield 28, a lower leg shield 29, a rear frame cover 30 and others.

A portion between the driver seat 8 and the head pipe 3 is largely curved downward, and the rear leg shield 28 provided with a step floor 31 on which a rider puts both feet is arranged in a bottom portion thereof. The rear leg shield 28 is arranged so as to cover a horizontal portion of the downtube 4 from the above and is fixed to the downtube 4. Further, the lower leg shield 29 is arranged below the rear leg shield 28 so as to cover the horizontal portion of the downtube 4 from the below. A floor lower portion receiving chamber 32 is disposed in a space formed between the rear leg shield 28 and the lower leg shield 29, so that it is possible to access an interior portion thereof by freely opening and closing a lid 33 provided to the step floor 31. Furthermore, the front leg shield 27 standing upward from a front portion of the rear leg shield 28 is arranged so as to cover front and rear portions of the head pipe 3 and is fixed to a stand-up portion of the downtube 4, and a head light 34 is disposed in a front lower portion of the front leg shield 27.

On the contrary, the rear frame cover 30, for example, formed in a laterally separated manner or in an integral manner is provided in a periphery of the rear frame 5 so as to surround the right and left portions of the rear frame 5. Further, a combination lamp 35 is provided at a rear end of the rear frame cover 30. A rear carrier 36 is provided above the combination lamp 35. In this case, the cover element is molded by a plastic resin material, for example, a PP resin, an ABS resin or the like.

The unit swing type engine 10 of the scooter type vehicle 1A of the first example is provided with a general forced-air-cooling-type four-stroke-cycle one cylinder engine main body 13. The engine main body 13 is constituted by a crank case 37 provided with a crank shaft, not shown, mainly extending in a width direction of the vehicle body and a cylinder assembly 39 forward inclined in a substantially horizontal direction towards a front side of the crank case 37 and having a central axis Z-Z arranged along a forward moving direction of the vehicle.

Further, the cylinder assembly 39 has a cylinder block 40 arranged in a front side of the crank case 37 and a cylinder head 41 arranged in a front side of the cylinder block 40. A piston, not shown, is slidably installed within the cylinder block 40 and a valve moving apparatus, not shown, is installed in the cylinder head 41.

In this example, the engine main body 13 may be a two-stroke-cycle engine, a multi-cylinder engine or a water-cooling-type engine. Further, in the case of the water-cooling-type engine, it is desirable that the radiator is arranged at a position with which a running wind is easily brought into contact, for example, a forward portion 42a of the head pipe 3 and a front portion 42b of the downtube 4 below the head pipe 3.

A general type exhaust apparatus 43 is provided for the unit swing type engine 10 and the exhaust apparatus 43 is composed of an exhaust pipe 45 and a muffler 46 connected to a downstream end of the exhaust pipe 45. The exhaust pipe 45 has a base end portion connected to an exhaust port 44 in a lower side within the cylinder head 41 and extending towards a lower portion opposite to the transmission case 14 of the unit swing type engine 10, that is, rearward along a right lower portion towards a vehicle moving direction in the present embodiment. The muffler 46 extends towards a rear oblique upper portion.

A fuel injection type intake apparatus 47 is also disposed to the unit swing type engine 10. The intake apparatus 47 is provided, as main elements, with an air cleaner 48A sucking the external air so as to make it clean, a throttle body 49 adjusting a flow amount of the sucked external air (hereinafter, refer to an intake air), an injector 50 as a fuel injecting means for injecting a fuel into an intake passage 49a of the throttle body 49, a fuel pump 51 feeding, under pressure, the fuel in the fuel tank 9A to the injector 50 and others.

A flow amount of the intake air is adjusted by opening and closing a throttle valve 52 disposed in the intake passage 49a, and the opening and closing operation thereof is performed by the throttle grip 20a connected through a throttle cable 53 extending from the throttle body 49.

Furthermore, the air cleaner 48A and the throttle body 49 are connected by a suction pipe 54, and the throttle body 49 and an intake port 55 in an upper side within the cylinder head 41 are connected by an intake pipe 56. Then, the suction pipe 54 and the intake pipe 56 constitute an intake passage connecting the intake port 55 to the air cleaner 48. The fuel tank 9A and the fuel pump 51, as well as the fuel pump 51 and the injector 50, are connected to each other by means fuel hoses 57.

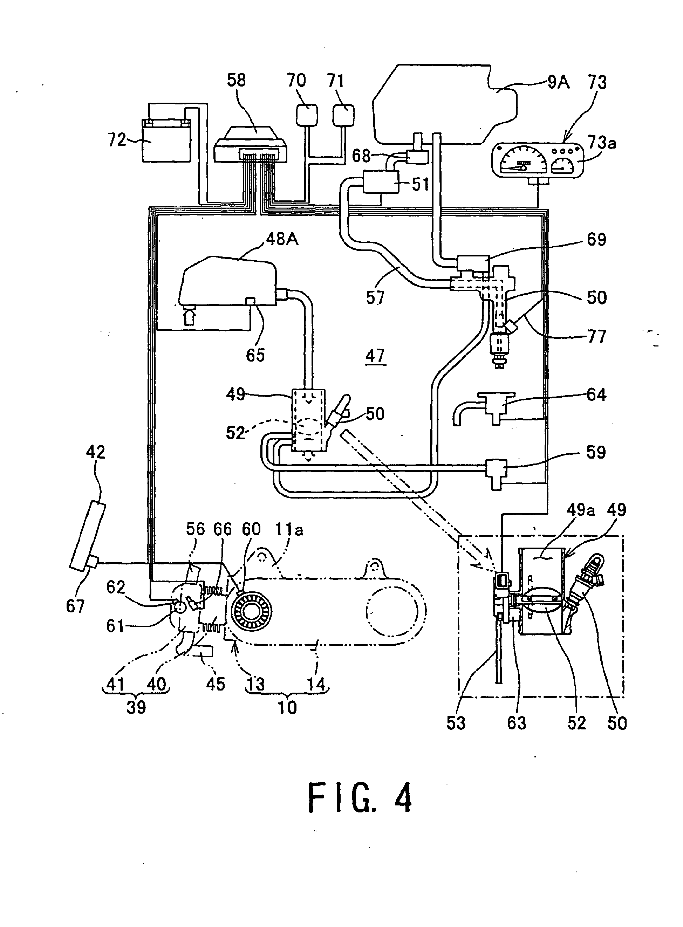

Further, an amount, a timing and the like of the fuel injection performed by the injector 50 are electronically controlled by a controller 58. A fuel injection system will be explained hereunder with reference to Fig. 4.

With reference to Fig. 4, the fuel injection system is composed of a sensor unit, a control unit and an injection unit. The sensor unit is disposed for obtaining data necessary for determining and correcting a basic injection amount of the fuel and is provided with an intake pressure sensor 59 for detecting an intake pressure in the intake passage 49a of the throttle body 49, a signal generator 60 (a rotational number sensor) for detecting a rotational number of the crank shaft, a cam position sensor 62 for detecting a position (a valve timing) of a cam shaft 61 in the cylinder head 41 and a throttle position sensor 63 for detecting an opening degree of the throttle valve 52 in the intake passage 49a, in order to determine an amount of injection.

Furthermore, in order to correct the amount of injection, there are provided with an atmospheric pressure sensor 64 for detecting an atmospheric pressure, an intake temperature sensor 65 mounted to the air cleaner 48A and detecting a temperature of the intake air, a plug seat temperature sensor 66 for detecting a temperature of an ignition plug mounting seat in the case that the engine main body 13 is of an air-cooling-type, a water temperature sensor 67 mounted to the radiator 42 and detecting a temperature of a cooling water in the case that the engine main body 13 is of a water-cooling-type. Then, the data obtained by the sensor units are transmitted to the controller 58 as a control portion, thus determining the amount and the timing of the fuel injection.

Furthermore, data about the amount and the timing of the fuel injection determined by the controller 58 are transmitted to the injection unit to control each of the apparatus or devices. The injection unit is composed of the fuel pump 51, the injector 50 and the like mentioned above. Furthermore, a fuel filter 68 for removing foreign matters within the fuel is provided in an upstream side of the fuel pump 51. In this embodiment, with reference to Fig. 4, the fuel pump 51 and the fuel filter 68 are arranged outside the fuel tank 9A. However, the structure may be made such that the apparatus are installed within the fuel tank 9A.

Further, an excessive component of the fuel fed to the injector 50 through the operation of the fuel pump 50 is returned to the fuel tank 9A by a pusher regulator 69. Then, as an auxiliary device for controlling the injection unit, for example, a cut sensor 70, a fuel pump relay 71 and the like are provided so as to be connected to the controller 58.

Furthermore, a battery 72 is connected to the controller 58 and an electric power is supplied thereto, and further, the controller 58 is also connected to a combination meter 73 so as to indicate a remaining amount of the fuel, an alarm with respect to the fuel injecting system and the like on a meter panel 73a.

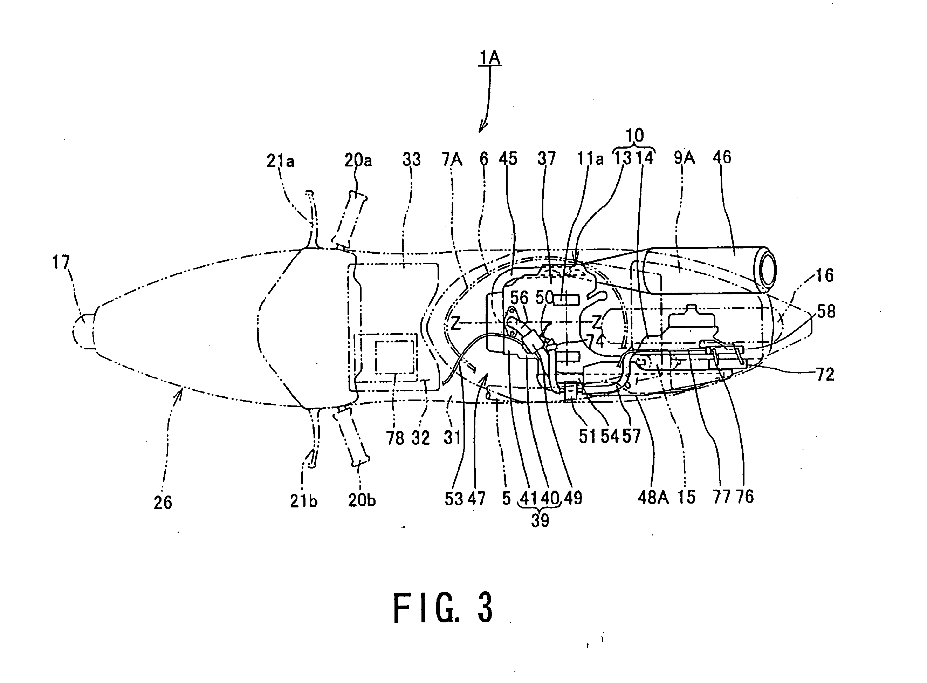

Hereunder, a description will be given of an arrangement of the intake apparatus 47. As shown in Figs. 2 and 3, the air cleaner 48A constituting the intake apparatus 47 is arranged on the transmission case 14 of the unit swing type engine 10, and the throttle body 49 provided with the injector 50 is arranged on the cylinder block 40 disposed in an obliquely front portion thereof. In this case, the air cleaner 48A, the throttle body 49, and the suction pipe 54 and the intake pipe 56 connecting these members are integrally formed and fixed to the upper surface of the engine 10 so as to be integrally swung.

Further, the fuel pump 51 is arranged above the suction pipe 54 and fixed to the rear frame 5, and the fuel hose 57 having an elasticity or flexibility extends from the fuel pump 51 to the fuel tank 9A and the injector 50. Then, the fuel hose 57 is fixed to a bottom surface of the article accommodation box 7A, for example, by a clamp 74 near the injector 50, thereby preventing the fuel hose 57 from coming off from the injector 50 when the injector 50 swings together with the engine 10.

Further, the controller 58 and the battery 72 are disposed to the side portion of the fuel tank 9A provided at the back of the accommodation box 7A adjacent to the fuel tank 9 in a parallel manner. Since the side portion of the fuel tank 9A at the back of the accommodation box 7A is apart from the engine 10 and the periphery thereof is surrounded by the rear frame cover 30, it is hard for heat generated by the unit swing type engine 10 to be transmitted to the controller 58 if the controller 58 is arranged in this place, and water-proof and dust-proof characteristics are high, so that it is preferable to place the controller 58. Further, if the unit swing type engine 10 is provided with the water-cooling-type engine main body, the engine is disposed to the place apart from the radiator 42a and 42b, so that the controller 58 is less little affected by an exhaust heat discharged from the radiator.

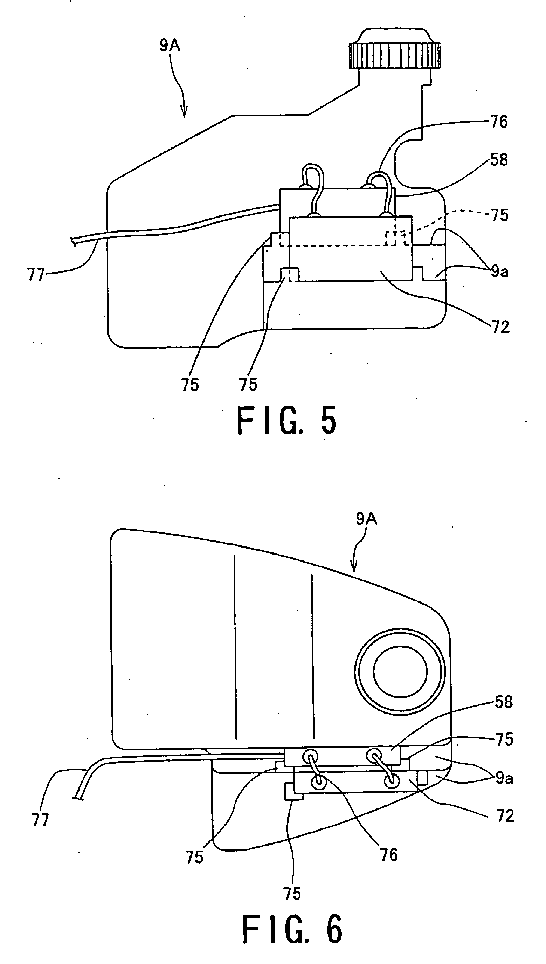

Fig. 5 is an enlarged left side elevational view of the fuel tank 9A and Fig. 6, is an enlarged plan view of the fuel tank 9A. As shown in Figs. 5 and 6, a step portion 9a is formed, for example, on a left side surface of the fuel tank 9A to thereby form the space for placing the-controller 58 and the battery 72. Further, a projection 75 for fixing is provided to the space corresponding to the shape of the bottom surface of the controller 58 and the battery 72 to position and fix the same.

The controller 58 and the battery 72 are disposed in parallel to each other to make short the length of a wire 76 between both of the elements 58 and 72. A control cable 77 extends towards the injector 50 from the controller 58. In this case, the floor lower portion receiving chamber 32 formed between the rear leg shield 28 and the lower leg shield 29 may be employed as the other place where the heat from the unit swing type engine 10 and the radiators 42a and 42b is hard to be transmitted and the conditions for arranging the controller 58 having high water-proof and dust-proof characteristics are satisfied. In the example shown in Figs. 2 and 3 with double-dotted chain line, the controller 78 is arranged within the floor lower portion receiving chamber 32.

In this case, a large accommodation capacity (inner volume) is required for the accommodation box 7A arranged above the unit swing type engine 10. Further, the intake apparatus 47 is arranged between the unit swing type engine 10 and the accommodation box 7A, and the bottom surface thereof is formed so as to provide such a shape that the rear cushion unit 15 is not brought into contact with any of the unit swing type engine 10 and the intake apparatus 47 in a state of being most compressed, due to a vertical swing motion thereof.

In particular, the bottom surface of the article accommodation box 7A is formed in an obliquely forward descending direction so as to be substantially in parallel to a line connecting two points at the highest position of an upper profile 79 of the unit swing type engine 10 and the intake apparatus 47 in a state that the rear cushion unit 15 is most compressed, that is, in the present embodiment, a line X-X connecting an upper portion of the cylinder head 41 and an upper portion of the throttle body 49 or a line X'-X' connecting an upper portion of the cylinder head 41 and an upper portion of the air cleaner 48.

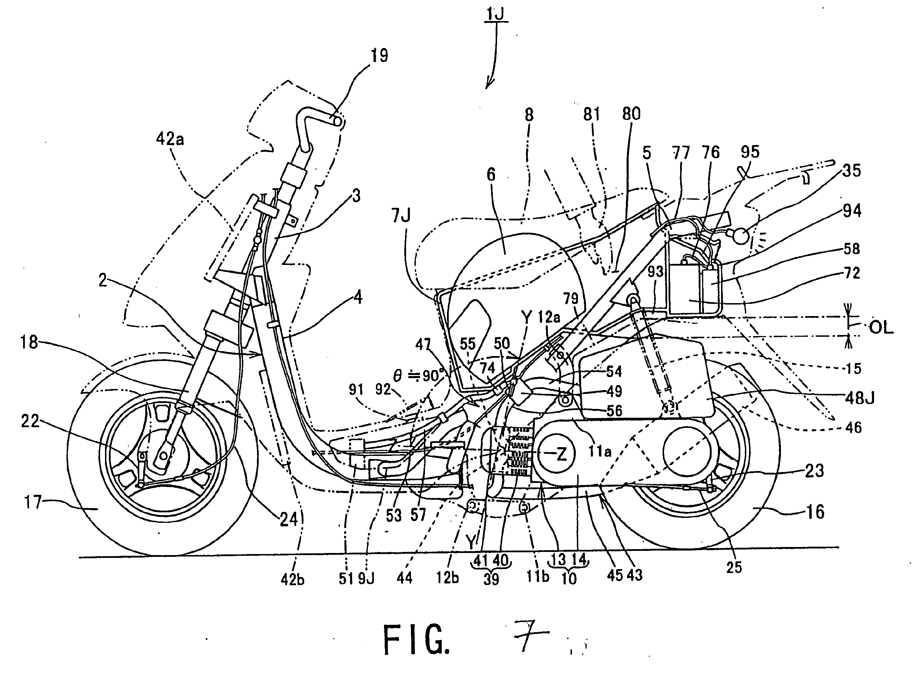

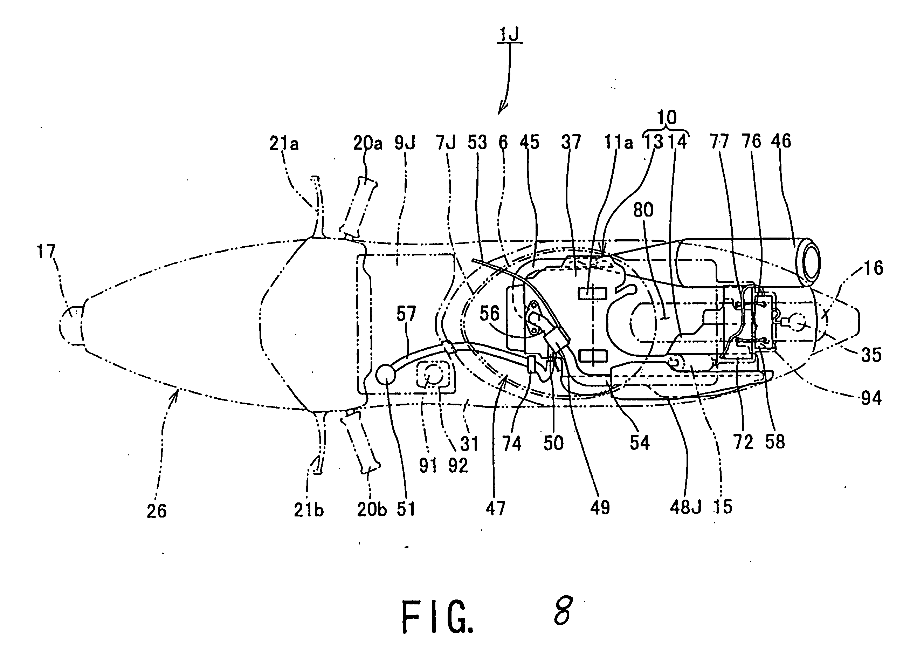

Figs. 7 and 8 show a first example of a second embodiment of a scooter type vehicle 1J to which the present invention is applicable, in which Fig. 7 is a left side elevational view showing an internal structure of the scooter type vehicle 1J and Fig. 8 is a schematic plan view of the scooter type vehicle 1J shown in Fig. 7. In this case, the same reference numerals are attached to the corresponding elements as those of the scooter type vehicle 1A shown in the first embodiment of FIGs. 1 to 3, and the description thereof is hence omitted herein as occasion demands.

As shown in Figs. 7 and 8, the scooter type vehicle 1J basically has the same structure as that of the scooter type vehicle 1A shown in the first embodiment. However, the structure of this example is different in the following points.

At first, a fuel tank 9J is moved, from a rear portion of an article accommodation box 7J, to an independent space below the step floor 31 in which the floor lower portion receiving chamber 32 is inherently provided, and as is described at a time of explaining the structure of the fuel injection system, the fuel pump 51 is installed in the fuel tank 9J. Further, an oil supply lid 92 is disposed to the step floor 31 directly above an oil supply port 91 of the fuel tank 9J so as to be freely opened and closed.

Then, the fuel tank 9J is provided to the lower portion of the step floor 31, so that the accommodation box 7J extends rearward and the capacity thereof can be increased. Further, at a time of extending the accommodation box 7J rearward, an upper profile 79 of an air cleaner 48J is overlapped (OL) with a bottom surface of the accommodation box 7J in a side elevational view in a state that the rear cushion unit 15 is most compressed. Here, in the case that the air cleaner 48J and the bottom surface of the accommodation box 7J are interfere with each other, an escaping portion 93 towards the above portion of the bottom surface of the accommodation box 7J may be recessed. As a result, even in the case that a stroke amount of the rear cushion unit 15 is sufficiently secured, a capacity of the accommodation box 7J is not largely reduced.

Further, the bottom surface of the accommodation box 7J is formed in a mount shape in a side elevational view, the helmet 6 is received in a front portion of an apex thereof in a forward descending state, and the helmet take-out space 80 can be formed below the rear lower portion of the helmet 6 by setting the apex to the front side from the rear lower portion of the helmet 6, so that the helmet 6 can be easily taken out by a rider inserting his (her) hand 81 into the helmet take-out space 80.
Further, the shape of the article accommodation box 7J of this example may be applicable to the conventional structure of the vehicle using the carburetor (not shown).

Further, in this example, a rear receiving chamber 94 is formed at the back of the accommodation box 7J as a place where the heat from the unit swing type engine 10 and the radiators 42a and 42b is hard to be transmitted and high water-proof and dust-proof characteristics can be obtained, in such a manner as to be adjacent to the combination lamp 35, and the controller 58 and the battery 72 are disposed in the rear receiving chamber 94. In this example, the rear receiving chamber 94 is closed by a maintenance lid 95 which is freely opened and closed.

It is possible to take out the respective wires 76 in the same direction by arranging the controller 58, and the battery 72 in adjacent to the combination lamp 35, thus simplifying the arrangement of the wires. Furthermore, since the controller 58 and the battery 72 can be disposed in the the rear receiving chamber 94, both the apparatus 58 and 72 can be simultaneously maintained only by opening the maintenance lid 95.

Further, the scooter type vehicle 1J has a structure in which the throttle body 49 and the intake pipe 56 are arranged so that the axis Y-Y in the fuel injecting direction of the injector 50 substantially vertically crosses the central axis Z-Z of the cylinder assembly 39, whereby the fuel injected from the injector 50 is directed inside the intake port 55 to a side having a large curvature and having a large flow amount of the mixture gas.

In this example, the unit swing type engine 10 may be also suspended either at an upper position or a lower position.

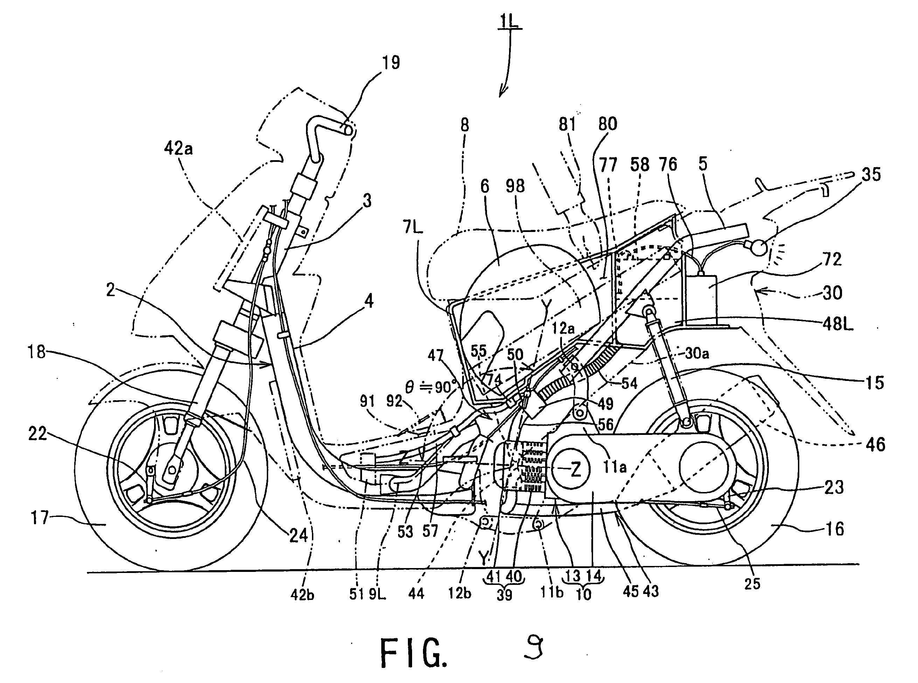

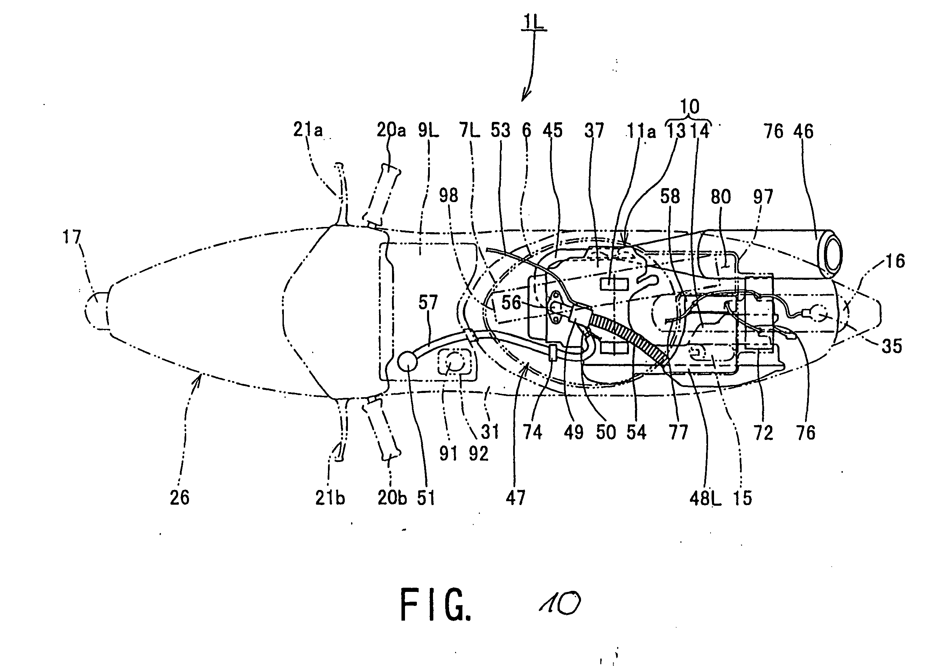

Figs. 9 and 10 show a second example of the second embodiment of a scooter type vehicle 1L to which the present invention is applicable, in which Fig. 9 is a left side elevational view showing an internal structure of the scooter type vehicle 1L and Fig. 10 is a schematic plan view of the scooter type vehicle 1L shown in Fig. 9. In this example, the same reference numerals are attached to the same elements as those of the scooter type vehicle 1J shown in the first example of the present second embodiment, and the description thereof is hence omitted herein as occasion demands.

As shown in Figs. 9 and 10, the scooter type vehicle 1L has a structure in which an air cleaner 48L is arranged in a rear left side of an article accommodation box 7L corresponding to a portion of a space at the back of the accommodation box 7L formed by placing a fuel tank 9L in the lower portion of the step floor 31. Then, the suction pipe 54 extends towards the throttle body 49 from a lower portion of the air cleaner 48L to thereby provide a substantially linear shape. In this case, the throttle body 49 integrally swings together with the unit swing type engine 10 in a vertical direction, and the air cleaner 48L is fixed to the vehicle body side, and for this reason, the suction pipe 54 can be formed by a material having an elasticity or a material having a bellows structure.

An intake resistance is reduced by arranging the suction pipe 54 in a substantially liner manner, and an engine output can be improved. Furthermore, since the air cleaner 48L is arranged at the back of the accommodation box 7L, not on the transmission case 14, it is possible to increase a freedom for determining (designing) a lower line 30a of the rear frame cover 30 surrounding the right and left portions of the rear frame 5.

Here, in the case that the unit swing type engine 10 is suspended to the engine suspending bracket 12a provided in the rear frame 5 by a pair of right and left engine suspending bosses 11a parallelly disposed on an upper surface thereof, the suction pipe 54 is arranged so as to pass through the portion between the right and left engine suspending bosses 11a and the suspending bracket 12a.

Still furthermore, since only a certain portion of the space at the rear of the accommodation box 7L can be utilized for arranging the air cleaner 48L, the other portions, that is, a right side of the air cleaner 48L, can be utilized as a rearward extending portion 97 of the article accommodation box 7L, and therefore, a long article 98 can be accommodated. Further, the controller 58 is arranged at a portion between the air cleaner 48L and the rearward extending portion 97 of the accommodation box 7L as a place where the heat from the engine 10 and the radiators 42a and 42b is hard to be transmitted and the water-proof and dust-proof characteristics become high.

Furthermore, since the helmet take-out space 80 is formed between the rearward extending portion 97 and the rear portion of the helmet 6, the helmet 6 can be easily taken out by a rider by inserting his (her) hand 81 into the helmet take-out space 80.

In this example, according to the shape of the accommodation box 7L, the helmet 6 can be easily taken out and the long article can be accommodated therein, and this structure may be applicable to a vehicle using the carburetor (not shown) of a prior art.

## Claims

1. A scooter-type vehicle (1) which comprises: a unit swing type engine (10) provided with an engine body (13) having a cylinder assembly (39) forward inclined in a substantially horizontal direction and having a central axis (Z-Z) arranged along a longitudinal direction of a vehicle body and a transmission case (14) rearward extending from one side of the engine body (13) and supporting a rear wheel (16) to a rear end thereof, swingably pivoted to a vehicle body frame (2) and flexibly supported to the vehicle body frame (2) through a cushion unit (15); a fuel injection type intake apparatus (47) comprising a throttle body (49) connected to an intake port (55) of the cylinder assembly (39), an air cleaner (48) connected to the throttle body (49), fuel injecting means (50) and a controller (58) for controlling a fuel injection amount of the fuel injecting means (50); and an accommodation box (7) arranged above the unit swing type engine (10):
**characterized in that** a fuel tank (9) is arranged to the engine body (13) in front of the swing unit type engine (10), the air cleaner (48) is arranged above the swing unit type engine (10), the bottom surface of a frontal area of the accommodation box (7) is formed to be downwardly protruded in a side view, a helmet (6) is accommodated in front of the top portion of the bottom surface of the accommodation, box (7) and the engine suspending boss (11a) disposed on the upper surface of the swing unit type engine (10), the throttle body (49) and the fuel injection means (50) are disposed below the accommodation box (7) and behind the downwardly protruded portion thereof.

2. A scooter-type vehicle (1) which comprises: a unit swing type engine (10) provided with an engine body (13) having a cylinder assembly (39) forward inclined in a substantially horizontal direction and having a central axis (Z-Z) arranged along a longitudinal direction of a vehicle body and a transmission case (14) rearward extending from one side of the engine body (13) and supporting a rear (16) wheel to a rear end thereof, swingably pivoted to a vehicle body frame (2) and flexibly supported to the vehicle body frame (2) through a cushion unit (15), a carburetor connected to an intakeport (55) of the cylinder assembly (39); and an accommodation box (7) arranged above the unit swing type engine (10) wherein a fuel tank (9) is arranged to the engine body (13) in front of the swing unit type engine (10), and the bottom surface of a frontal area of the accommodation box (7) is formed to be downwardly protruded in a side view, a helmet (6) is accommodated in front of the top portion of the bottom surface of the accommodation box (7),
**characterized in that**
the air cleaner (48) is arranged above the swing unit type engine (10), and the engine suspending boss (11a) disposed on the upper surface of the swing unit type engine (10) and the carburetor are disposed below the accommodation box (7), and behind the downwardly protruded portion thereof.

3. The scooter type vehicle according to claim 1 or 2.
wherein the suspending boss (11a) provided to the unit swing type engine (10) and the vehicle body frame (2) are pivoted by an engine suspension bracket (12a) so that the swing unit type engine (10) is swingable, and a helmet take-out space (80) is formed to a vehicle rear side portion of the bottom surface of the accommodation box (7).

4. The scooter type vehicle according to any one of claims 1 to 3,
wherein the fuel tank (9) is provided with a fuel pump on a left side of the vehicle in the vehicle advancing direction.

5. The scooter type vehicle according to any one of claims 1, 2 and 4,
wherein the engine body is constructed as a water-cool type engine, and a radiator for cooling the engine body is disposed below a head pipe supporting a front wheel of the vehicle.

## Patentansprüche

1. Motorroller (1) umfassend: eine Schwenk-Motoreinheit (10), ausgestattet mit einem Motorkörper (13), der eine nach vorne in eine etwa horizontale Richtung geneigte Zylinderanordnung (39) aufweist und eine Mittelachse (Z-Z) besitzt, die entlang einer Längsrichtung einer Fahrzeugkarosserie verläuft, und mit einem Getriebegehäuse (14), welches sich von einer Seite des Motorkörpers (13) nach hinten erstreckt und ein Hinterrad (16) an seinem hinteren Ende lagert, schwenkbar und über eine Dämpfungseinheit (15) flexibel an dem Fahrzeugkarosserie-Rahmen (2) gelagert, ferner eine Kraftstoffeinspritzungs-Einlassvorrichtung (47), enthaltend einen mit einer Einlassöffnung (55) der Zylinderanordnung (39) verbundenen Drosselkörper (49), einen mit dem Drosselkörper (49) verbundenen Luftreiniger (48), eine Kraftstoffeinspritzeinrichtung (50) und eine Steuerung (58) zum Steuern der Kraftstoffeinspritzmenge der Kraftstoffeinspritzeinrichtung (50); und einen Aufnahmekasten (7), der oberhalb der Schwenk-Motoreinheit (10) angeordnet ist,
**dadurch gekennzeichnet, dass** dem Motorkörper (13) vor der Schwenk-Motoreinheit (10) ein Kraftstofftank (9) zugeordnet ist, der Luftreiniger (48) oberhalb der Schwenk-Motoreinheit (10) angeordnet ist, die Bodenfläche eines vorderen Bereichs des Aufnahmekastens (7) so ausgebildet ist, dass sie in einer Seitenansicht nach unten ragt, vor dem oberen Teil der Bodenfläche des Aufnahmekastens (7) ein Helm (6) aufgenommen ist, und die Motoraufhängestelle (11a) an der Oberseite der Schwenk-Motoreinheit (10), der Drosselkörper (49) und die Kraftstoffeinspritzeinrichtung (50) unterhalb des Aufnahmekastens (7) und hinter dessen nach unten ragendem Teil angeordnet sind.

2. Motorroller (1), umfassend eine Schwenk-Motoreinheit (10) mit einem Motorkörper (13), der eine nach vorne in etwa horizontaler Richtung geneigte Zylinderanordnung (39) aufweist und eine Mittelachse (Z-Z) besitzt, die in Längsrichtung des Fahrzeugkörpers angeordnet ist, und mit einem Getriebegehäuse (14), welches sich von einer Seite des Motorkörpers (13) aus nach hinten erstreckt und an seinem hinteren Ende ein Hinterrad (16) lagert, schwenkbar und über eine Dämpfungseinheit (15) flexibel an dem Fahrzeugkarosserie-Rahmen gelagert, einen Vergaser, der an eine Einlassöffnung (55) der Zylinderanordnung (39) angeschlossen ist, und einen Aufnahmekasten (7), der oberhalb der Schwenk-Motoreinheit (10) angeordnet ist, wobei an dem Motorkörper (13) vor der Schwenk-Motoreinheit (10) ein Kraftstofftank (9) angeordnet ist, und die Bodenfläche eines vorderen Bereichs des Aufnahmekastens (7) so ausgebildet ist, dass sie in einer Seitenansicht nach unten ragt, wobei vor dem oberen Teil der Bodenfläche des Aufnahmekastens (7) ein Helm (6) aufgenommen ist, **dadurch gekennzeichnet, dass** die Motoraufhängungsstelle (11a) an der Oberseite der Schwenk-Motoreinheit (10) und der Vergaser unterhalb des Aufnahmekastens (7) und hinter dessen nach unten ragendem Teil angeordnet sind.

3. Motorroller nach Anspruch 1 oder 2, bei dem die Aufhängungsstelle (11a) an der Schwenk-Motoreinheit (10) und der Fahrzeugkarosserierahmen (2) von einem Motoraufhängungsträger (12a) schwenkbar gelagert sind, so dass die Schwenk-Motoreinheit (10) schwenkbar ist, und an einen zur Fahrzeugrückseite hin gelegenen Teil der Bodenfläche des Aufnahmekastens (7) ein Helmentnahmeraum (80) gebildet ist.

4. Motorroller nach einem der Ansprüche 1 bis 3, bei dem der Kraftstofftank auf der linken Seite des Fahrzeugs bei Betrachtung in Fahrtrichtung des Fahrzeugs mit einer Kraftstoffpumpe ausgestattet ist.

5. Motorroller nach einem der Ansprüche 1, 2 und 4, bei dem der Motorkörper als wassergekühlter Motor ausgebildet ist, und ein Gebläse zum Kühlen des Motorkörpers sich unterhalb eines ein Vorderrad des Fahrzeug tragenden Kopfrohrs befindet.

## Revendications

1. Véhicule de type scooter (1), comprenant : un moteur de type à bloc oscillant (10) doté d'un corps de moteur (13), comportant un ensemble de cylindre (39) incliné vers l'avant dans une direction pratiquement horizontale et comportant un axe central (ZZ) agencé le long d'une direction longitudinale d'un corps de véhicule ainsi qu'un carter de boîte de vitesses (14) s'étendant vers l'arrière à partir d'un côté du corps de moteur (13), et supportant une roue arrière (16) sur une extrémité arrière de celui-ci, pivotant de manière à pouvoir osciller sur une ossature de caisse de véhicule (2) et supporté de manière flexible sur l'ossature de caisse de véhicule (2) par le biais d'un appareil amortisseur (15) ; un appareil d'admission de type injection de carburant (47) comprenant un corps de papillon (49) raccordé à un orifice d'admission (55) du corps de cylindre (39); un filtre à air (48) raccordé au corps de papillon (49), des moyens d'injection de carburant (50), et un contrôleur (58) destiné à réguler une quantité d'injection de carburant des moyens d'injection de carburant (50), et un coffre de rangement (7) agencé au-dessus du moteur de type à bloc oscillant (10),
**caractérisé en ce qu'**un réservoir de carburant (9) est agencé dans le corps de véhicule (13) devant le moteur de type à bloc oscillant (10), le filtre à air (48) est agencé au-dessus du moteur de type à bloc oscillant (10), la surface de fond d'une zone frontale du coffre de rangement (7) est formée de manière à faire saillie vers le bas d'après une vue latérale, un casque (6) est logé devant la partie supérieure de la surface de fond du coffre de rangement (7), et le bossage de suspension (11a) disposé sur la surface supérieure du moteur de type à bloc oscillant (10), le corps de papillon (49) et les moyens d'injection de carburant (50) sont disposés au-dessous du coffre de rangement (7) et derrière la partie faisant saillie vers le bas de celui-ci.

2. Véhicule de type scooter (1), comprenant : un moteur de type à bloc oscillant (10) doté d'un corps de moteur (13), comportant un ensemble de cylindre (39) incliné vers l'avant dans une direction pratiquement horizontale et comportant un axe central (ZZ) agencé le long d'une direction longitudinale d'un corps de véhicule ainsi qu'un carter de boîte de vitesses (14) s'étendant vers l'arrière à partir d'un côté du corps de moteur (13), et supportant une roue arrière (16) sur une extrémité arrière de celui-ci, pivotant de manière à pouvoir osciller sur une ossature de caisse de véhicule (2) et supporté de manière flexible sur l'ossature de caisse de véhicule (2) par le biais d'un appareil amortisseur (15) ; un carburateur raccordé à un orifice d'admission (55) du corps de cylindre (39), et un coffre de rangement (7) agencé au-dessus du moteur de type à bloc oscillant (10), dans lequel un réservoir de carburant (9) est agencé dans le corps de véhicule (13) devant le moteur de type à bloc oscillant (10), la surface de fond d'une zone frontale du coffre de rangement (7) est formée de manière à faire saillie vers le bas d'après une vue latérale, un casque (6) est logé devant la partie supérieure de la surface de fond du coffre de rangement (7),
**caractérisé en ce que** le filtre à air (48) est agencé au-dessus du moteur de type à bloc oscillant (10), et le bossage de suspension (11a) disposé sur la surface supérieure du moteur de type à bloc oscillant (10) ainsi que le carburateur sont disposés au-dessous du coffre de rangement (7) et derrière la partie faisant saillie vers le bas de celui-ci.

3. Véhicule de type scooter selon la revendication 1 ou 2,
dans lequel le bossage de suspension (11a) prévu sur le moteur de type à bloc oscillant (10) et l'ossature de caisse de véhicule (2) sont pivotés par un support de suspension de moteur (12a), de telle sorte que le moteur de type à bloc oscillant (10) peut osciller, et un espace de sortie de casque (80) est formé dans une partie latérale arrière de véhicule de la surface de fond du coffre de rangement (7).

4. Véhicule de type scooter selon l'une quelconque des revendications 1 à 3, dans lequel le réservoir de carburant (9) est doté d'une pompe à carburant sur un côté gauche du véhicule dans la direction de progression du véhicule.

5. Véhicule de type scooter selon l'une quelconque des revendications 1, 2 et 4,
dans lequel le corps de moteur est construit sous la forme d'un moteur de type à refroidissement par eau, et un radiateur destiné à refroidir le corps de moteur est disposé au-dessous d'une tubulure de refoulement supportant une roue avant du véhicule.
